# EUROPEAN PATENT APPLICATION

(11) **EP 4 782 790 A1**
(43) Date of publication of application: **29.07.2026**
(21) Application number: 25153336.0
(22) Date of filing: 22.01.2025
(51) Int. Cl.: G01C 21/32, G01C 21/00

(54) **LOCALIZATION TECHNIQUES**

(71) Applicant: Siemens Aktiengesellschaft, 80333 München (DE)
(72) Inventor: Geipel, Markus Michael, 81739 München (DE); Krubasik, Edward Cornelius, 80809 München (DE); Pol, Sebastian, 90556 Seukendorf (DE)
(74) Representative: Siemens Patent Attorneys

(57) **Abstract**

A, preferably computer-implemented, method of localizing an object (1), e.g., an autonomous vehicle, the method comprising the steps of: inputting image data (2) of an environment (3) of the object and a prompt (6) into a multimodal LLM for the LMM (4) to generate a textual description (5) of the image data (2) in accordance with the prompt (6), obtaining first spatial information (7) from a vector database (8), wherein the vector database (8) serves for associating an embedding (9) of the textual description (5) with the first spatial information (7), and determining a position (100) of the object (1) based on the first spatial information (7), and preferably second spatial information, e.g., in the form of coordinates, obtained from sensor data (10) from one or more sensors (11).

## Description

### Technical Field

The present disclosure is concerned with localization, mapping and navigation of an object with the help and in the technical fields of artificial intelligence, computation and language, and robotics.

### Background

### Independent of the grammatical term usage, individuals with male, female or other gender identities are included within the term.

Simultaneous localization and mapping, SLAM, is the computational problem of constructing or updating a map of an unknown environment while simultaneously keeping track of an agent's or object's location within it. There are several algorithms known to solve it in, at least approximately, tractable time for certain environments.

From "LangNav: Language as a Perceptual Representation for Navigation", by Bowen Pan, Rameswar Panda, SouYoung Jin, Rogerio Feris, Aude Oliva, Phillip Isola, Yoon Kim, arXiv:2310.07889, it has become known to use large language models to help robots navigate. The method uses language-based inputs instead of costly visual data to direct a robot through a multistep navigation task.

From "Online Embedding Multi-Scale CLIP Features into 3D Maps", by Shun Taguchi, Hideki Deguchi, arXiv:2403.18178, an online embedding of multi-scale CLIP (Contrastive Language-Image Pre-Training) features into 3D maps has become known. By harnessing CLIP, this methodology surpasses the constraints of conventional vocabulary-limited methods and enables the incorporation of semantic information into the resultant maps.

From "Language and Sketching: An LLM-driven Interactive Multimodal Multitask Robot Navigation Framework", by Weiqin Zu, Wenbin Song, Ruiqing Chen, Ze Guo, Fanglei Sun, Zheng Tian, Wei Pan, Jun Wang, an LLM-driven interactive multimodal multitask robot navigation framework has become known.

Non-static environments, such as those containing other objects, such as vehicles or pedestrians, continue to present challenges.

### Summary

Mobile robots like AGVs, vacuum bots, robotic lawn mowers, etc. need to orient themselves in the space they are operating in. At the same time, they need to map the space. The standard algorithmic framework for this is SLAM, Synchronous Localization and Mapping. Both LIDAR and RADAR readings may be used to that end. In environments which do not change much this works very well. In a space that changes regularly in unpredictable ways, the known solutions do not perform well and/or have their limitations. Exemplary spaces in which different objects are stored over time comprise a warehouse without a fixed storage system, a workshop where machines are commonly moved around, or a space with chairs which are rearranged. However, in a LIDAR or RADAR scan immobile and mobile objects look the same.

Another problem with these methods is that they force an unnatural communication upon users, such as human workers, handling the robots: For instance, to send a robot somewhere it may be necessary to point on the robot-built map or use a previously defined location name. If the robot does not have a map of the area it is supposed to operate, it needs to map first, before the user can send it somewhere, or the user even needs to manually steer the robot.

It is thus an object to further improve the localization of an object.

According to a first aspect, a, preferably computer-implemented, method of localizing an object, e.g., an autonomous vehicle, is proposed. The method comprising the step of inputting image data of an environment of the object and a prompt into a multimodal LLM, LMM, for the LMM to generate a textual description of the image data in accordance with the prompt. The method further comprising obtaining first spatial information, e.g., in the form of coordinates, from a vector database, wherein the vector database serves for associating an embedding of the textual description with the spatial information. The method further comprising determining a position of the object based on the first spatial information obtained from the vector database, and preferably second spatial information, e.g., also in the form of coordinates, obtained from sensor data from one or more sensors.

According to a second aspect, an apparatus, for example an autonomous vehicle, preferably comprising a processor and a memory, is proposed. The apparatus is operative to perform any one of the method steps according to the first aspect.

According to a third aspect a computer-program comprising program code is proposed. The computer-program performs, when executed, the method steps according to the first aspect.

Advantageous embodiments are described in the dependent claims and are disclosed in more detail in the following.

### Brief Description Of The Drawings

- Figure 1: shows a (production) environment with static and non-static, i.e., mobile, objects.
- Figure 2: shows a procedure for localization and mapping of an object in an environment.
- Figure 3: shows a procedure for localization of an object in an environment.
- Figure 4: shows a procedure for navigating an object in an environment.
- Figures 5 to 11: show exemplary steps of localization of an object in an environment.

### Detailed Description

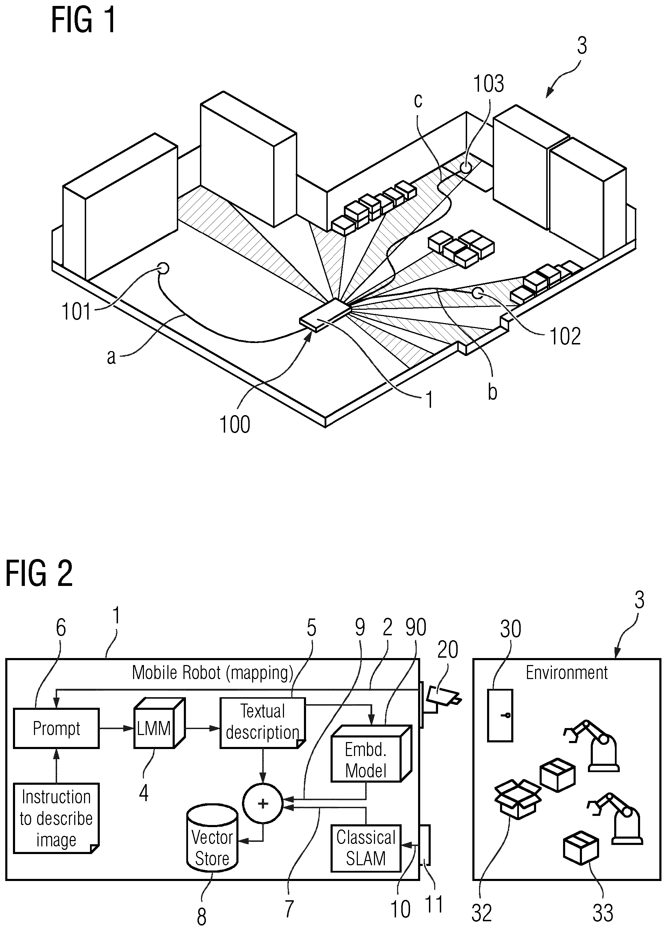

Figure 1 shows a (production) environment 3 with static and non-static, i.e., mobile, objects. Flexible environments, like manufacturing lines, e.g., in the automotive industry enhance operational agility, enabling quick adjustments and simplifying product customization to meet diverse customer demands efficiently. As the number and types of Automated Guided Vehicles, AGVs, and Autonomous Mobile Robots, AMRs, on the shopfloor grows, so does complexity. This increased automation adds complexity to material logistics, requiring precise coordination to ensure the right components are available at the right place and time. A detailed planned material management process is essential to keep up with the fast-paced demands of (production) environments 3, e.g. in the automative production and in particular in areas such as the so-called body shop and the final assembly. By integrating planning tools, manufacturers can streamline the flow of parts, minimize production delays, and enhance overall efficiency.

Automated guided vehicles 1, e.g., from Siemens, offer the necessary components, comprising hardware and software for operation of automated guided vehicles 1, and/or their integration into production, warehouse management, logistics and/or IT environments and networks, as the case may be. With the navigation software for AGVs 1, Siemens provides software that provides vehicle navigation using, e.g., SLAM-based localization or other localization methods. It supports efficient route planning on the AGV 1 and/or obstacle avoidance, and/or free navigation, for example by applying the principle of a (virtual) route a, b, c.

Navigation techniques may include Laser-guided navigation, magnetic navigation, inductive navigation and/or optical navigation. Respective sensors are used to gain information about the environment 3 of the AGV 1. Depending on this information, the navigation can be performed. Track information may be sent to the AGV 1 and depending on the kinematic concept velocities may be sent to the drives. The actuators, in this case the motors, obtain the relevant information form the drives. The vehicle 1 may then move in its environment, new information is read in via the sensors.

For example, at certain points, i.e. specific positions, on a track one or more actions may be required. At these positions the AGV 1 may need to interact, for example to process or transfer goods or wait at a crossing section within the roadmap when it receives a stopping signal from a controller. Additionally, such points may be used for changing of process values, like the driving speed, entrance of safety zones, altitude difference of the lifting table. A track may describe the path a, b, c the AGV 1 has to drive between these points. It should be understood that such a point 100 may be an absolute position, e.g. given by coordinates, but may also or instead relate to a e.g. a transponder number, e.g. of an RFID tag.

The classical solution is to run the robots on virtual rails, e.g. said paths a, b, c. This can be optical or magnetic markings in the floor. If the AGV 1 or robot is equipped with a camera, optical markers (e.g. ARUCU) can be used. All this requires planning and preparation ex ante. Furthermore, there are algorithms in the SLAM framework which account for environmental changes. They are statistical in nature and require a minimum of constancy in the environment 3 to work.

In particular, for the free navigation, i.e. where navigation is performed based on coordinates, of an AGV 1 a "Proximity Laser Scanner" (PLS) may be used to extract significant features out of the surrounding area.

The diverse nature of production processes and environments necessitates using various types of AGVs 1 and/or AMRs to optimize efficiency, flexibility, and safety in manufacturing operations. However, the integration of different AGV/AMR 1 types introduces increased operational complexity. This diversity in automation architecture, diagnostic concepts, and setups results in higher personnel costs due to the need for extensive training and frequent repairs. Additionally, it requires maintaining large stocks of spare parts to ensure uninterrupted operations. The implementation of comprehensive software solutions is essential to mitigate the time and material costs associated with the complexity of heterogeneous AGV/AMR 1 setups.

The interaction between AGVs 1, and robot cells, and the environment 3 for loading and/or unloading trolleys ensures a seamless flow of materials, enhancing efficiency and productivity. This automation reduces manual intervention, improves safety, and maintains consistent quality in the production process. An integrated traffic management being able to integrate AGV/AMR 1 of different manufacturers is crucial for effectively coordinating all AGVs/AMRs 1 and optimizing the facility's overall throughput. It also creates the possibility of improving cost and efficiency if the production site needs to be expanded over time because of market changes or customer choices.

To improve the maneuverability, control, and navigation of these vehicles 1, e.g., in order to yield an improved efficiency of the production, an increasingly precise and improved localization is required.

Furthermore, for use cases such as picking which has been normally done manually an AGV 1 needs to be able to navigate in a dynamic and/or non-static environment 3. For example, a user may wish to obtain certain goods by issuing a command in natural language causing the AGV 1 to fetch said goods. Thereby, products may automatically be transported directly to, e.g., an operator, as needed for picking. The same applies in case of material supply where a flexible solution for providing supply materials is required.

Another problem with these methods is that they force an unnatural communication upon the human workers handling the robots: For instance, to send a robot somewhere it is necessary point on the robot-built map or use a previously defined location name. If the robot does not have a map of the area it is supposed to operate, it needs to map first, before the operator can send it somewhere, or the operator needs to manually steer the robot. A natural communication would be similar to the way workers communicate among each other. For example, if a worker does not know where the storage is, a colleague might say "go all the way to the elevator, orient left and go through the next door you see". He or she would never say: "Run around in every area that you do not know, draw a map, come back with the map, and then I will mark the spot." This is however the way to tell robots today where to go.

Still further, there is a general need for a flexible and modular production in which the points of interaction, e.g., of an AGV 1 change dynamically. Hence, AGVs/AMRs 1 have to consider obstacles in their paths a, b, c which might limit their flexibility. Planning transport paths a, b, c of material in advance will last longer, which might lead to less efficiency. Finally, safety aspects such as collision avoidance has to be considered

A shown in Figure 2 an object like a mobile robot 1, like an AMR or AGV, may be equipped with a camera 20 and/or other sensors for capturing the environment. In addition to the camera 20 the mobile robot 1 may be equipped with one or more sensors 11 for performing classical SLAM. As the case may be, the same or different sensors 11 may be used for capturing environmental information and/or for SLAM.

The camera 20 may serve for capturing one or more images, i.e. image data 2, of the environment 3 in which the mobile robot is located. Thus, at first, the one or more camera images are combined with textual instruction to form a prompt 6 for a multimodal LLM 4, LMM. The one or more images together with the textual instruction(s) may thus from a prompt 6 that serves as an input for the multimodal LLM 4. The textual instruction causes the LMM 4 to provide a description 5 of the space captured by way of the one or more images. The textual instruction may serve for focusing the description 5 on invariant features 31 of that space. As a result, a textual description is obtained, e.g., output, by the multimodal LLM 4. Thereby mobile and non-mobile, i.e. spatially invariant, features 31 in the image (data) may be identified and/or distinguished, e.g., by way of the description of the surrounding space. A vector 9 can be calculated based on the textual description 5 of the environment 3 as captured by the image. A vector is a mathematical representation of data in a high-dimensional space. In this space, or embedding, each dimension corresponds to a feature of the data, with the number of dimensions ranging from a few hundred to tens of thousands, depending on the complexity of the data being represented. A vector's position in this space represents its characteristics. Words, phrases, or entire documents, as well as images, audio, and other types of data, can all be vectorized. These feature vectors 9 may be computed from the raw data, i.e. the textual description 5, using an embedding model 90, machine learning methods such as feature extraction algorithms, word embeddings or deep learning networks. The goal is that semantically similar data items receive feature vectors 9 close to each other.

A vector database 8, vector store or vector search engine is a database that can store vectors (fixed-length lists of numbers) along with other data items. Vector databases 8 typically implement one or more Approximate Nearest Neighbor algorithms, so that one can search the database with a query vector to retrieve the closest matching database records. Vector databases 8 can be used for similarity search, semantic search, multi-modal search, recommendations engines, large language models (LLMs), object detection, etc.

Thus, for each textual description 8 a feature vector 9 (known as an "embedding") may be computed, typically using an embedding model 90 such as a deep learning network, and may then be stored in a vector database 8. Hence, the textual description 5 is input into an embedding model 90 which outputs the feature vector 9 for that textual description. The embedding forms the key for a vector store database entry. The payload, which is stored in said database, can comprises the feature vector 9, the textual description 5 and/or spatial coordinates 7, e.g., acquired via the classical SLAM. Thus, the coordinates 7 as determined by way of the classical SLAM at the point in time the image was captured are associated with the textual description 5 and/or the feature vector 9 in the vector database 8.

It is thus proposed to complement existing statistical methods, i.e. vector embedding, with a semantic perception of the space mimicking human common sense. To that end, a Multimodal Large Language Model is employed. An LLM is a computational model for (natural) language processing. Multimodal LLMs are models that can understand and process different forms of input. These inputs consist of different "modalities", including, e.g., images, videos, and audio. Multimodal LLMs are capable of processing and interpreting information from different sources simultaneously.

Thus, a vector database 8 can be established in which the textual descriptions 5 are associated with feature vectors 9 and/or coordinates 7 of an environment an object is located in.

Thus, for creating a vector database 8, a (camera) image is combined with textual instruction to form a prompt for the multimodal LLM. Then, the textual instruction of the prompt causes the multimodal LLM to provide a description of the space focusing on invariant features of the space. The description is then input into an embedding model. The embedding forms the key for a vector database entry. The payload, i.e. the database entry available by the key, is the description and/or the special coordinates acquired via the classical SLAM. As a result, a vector database 8 is created that can be made available to one or more AGVs 1, one or more other mobile robots or one or more other device for navigating the environment, e.g. an (industrial) environment 9 such as a production system.

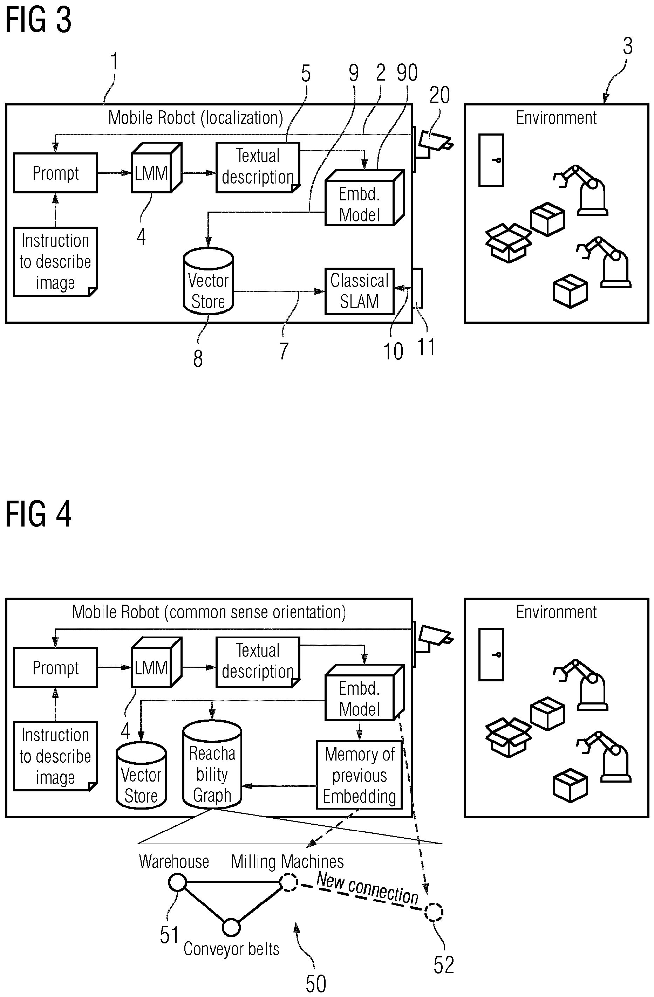

Turning to Figure 3, localization of an object 1 may be performed, for example based on the vector database. As described herein, the database associates a feature vector 9 (obtained by embedding a textual description of the environment) with a textual description 5 and/or spatial information 7, e.g., in the form of coordinates. Thus, as before when establishing the vector database 8 one or more images 2 may be captured and an image description may be generated using a prompt that is input into a multimodel LLM. Hence, during operation the textual image description 5 may be input in an embedding model 90. The embedding model 90 may generate an embedding of the textual description, i.e. a word embedding. Based on the embedding the resulting feature vector 9 may be used as a lookup in the vector database 8. For example, a nearest neighbor may be identified in the vector store. A similarity score may be used to compare the feature vector(s), i.e. an embedding of a current textual description with the stored embeddings of textual descriptions in the vector database 8. As a result, a similar, or most similar, encountered spaces along and/or (SLAM) coordinates in the vector store may be determined and, e.g., output. The coordinates can be used to determine a position of the object in the environment. For example, SLAM may be performed based on some sensor 11 readings and the SLAM coordinates 7 can be used in addition to the coordinates of the vector store to determine the object's position. This additional location estimation delivered by the vector store 8 adds robustness to the SLAM in situations where the sensor 11 readings, e.g., LIDAR or RADAR readings, are ambiguous or not matching an existing map because the configuration of the space changed.

Turning to Figure 4 a human-like common sense or free navigation is illustrated. As before, one or more images may be captured, e.g., by a camera installed on the (mobile) object, for example a mobile robot or AGV/AMR. Now, each encountered embedding, i.e. each feature vector, is written on a graph 50. To that end, graph nodes 51, 52 and/or edges may be dynamically generated and/or added to an existing graph 50. The nodes 51, 52 (or edges as the case may be) represent locations, and the edges (or nodes in the alternative case) paths between the locations. Edges may store additional information such as travel time, physical distance, etc. Based on the current embedding, i.e. current feature vector, and the previous one, an edge 52 is added to the graph 50, representing the fact that the current location has been reached via the last encountered location. The graph 50 may thus form (representation of) a map that serves for a communication between the (mobile) object and a user in a more natural style. It enables the (mobile) object, e.g., said mobile robot, to understand and/or act on commands such as: "Go to the milling machines and go past the conveyor belts". Or, if the mobile robot cannot determine where the packing robots are, a user may just say: "You know where the milling machines are, right? The packing machines are behind them through the door". This map can be crosslinked with a classical SLAM map, as described previously, to combine the advantages of both mapping systems. Such a natural communication would be similar to the way user such as plant operators communicate among each other. For example, if an operator does not know where the storage is, a colleague might say "go all the way to the elevator, orient left and go through the next door you see". He or she would never say: "Run around in every area that you do not know, draw a map, come back with the map, and then I will mark the spot." This is however the way to tell robots today where to go.

The localization techniques as described herein make use of LLM-based and/or LMM-based common sense reasoning to deal with changing spaces. In particular, existing LIDAR and RADAR-based SLAM algorithms may be enhanced to work robustly. By the techniques proposed the advantages of accurate spatial localization and mapping by LIDAR and RADAR with the natural common-sense orientation practiced by humans can be combined. As a result, a natural and intuitive interaction between users and mobile robots for the purpose of navigation is achieved. The solutions proposed herein enables a new intuitive communication style with mobile robots.

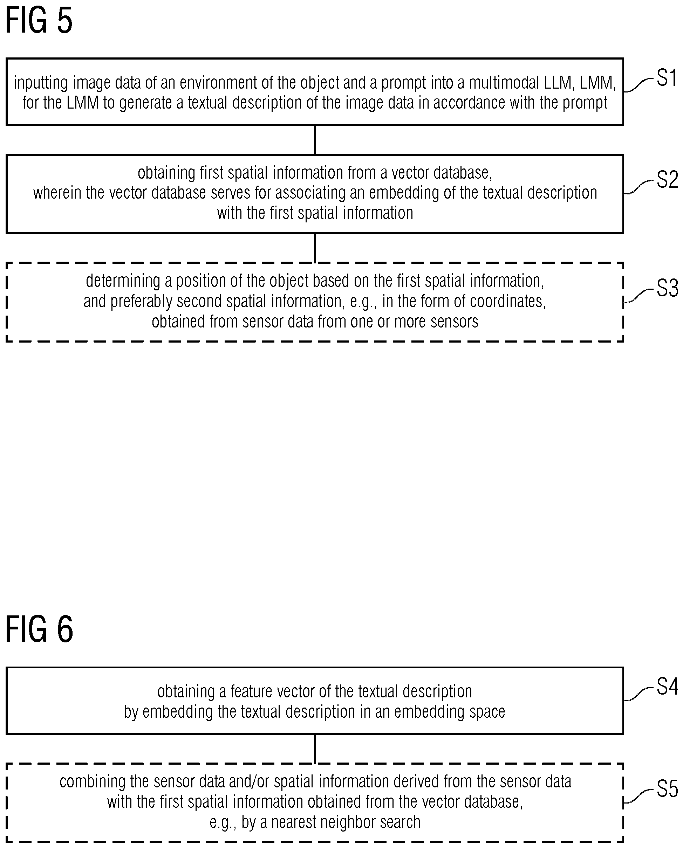

Figures 5 shows exemplary method steps, e.g. for locating or localizing an object, e.g., an autonomous vehicle such as an AGV or AMR. In a first step S1 the method comprises inputting image data of an environment of the object and a prompt into a multimodal LLM for the LMM to generate a textual description of the image data in accordance with the prompt. In a second step S2, first spatial information from a vector database is obtained, wherein the vector database serves for associating an embedding of the textual description with the first spatial information. The first spatial information may then be used for the localization of the object. In a step S3, a position of the object may be determined based on the first spatial information, and preferably second spatial information, e.g., in the form of coordinates, obtained from sensor data from one or more sensors.

Image data of the environment of the object can captured by a camera and received and stored e.g. in an image file format or as a data stream. As mentioned herein the environment may be an industrial facility like production system which comprises other spatial variant or invariant objects, such as one or more AGVs or AMRs, human operators, (transportation) vehicles, movable containers, modular production lines or the like. The camera may be attached on the object or may be attached to the object, i.e. mounted on the object, or may be external to the object, e.g. mounted on a wall of the environment of the object.

Multimodal LLM, also referred to as LMM, shave become known e.g. from publication "MM-LLMs: Recent Advances in MultiModal Large Language Models" arXiv:2401.13601 and may be used for the purposes described herein. As described herein, it is proposed to input the image data and a prompt into the LMM in order to obtain a textual description of the image data. A prompt may be understood as a natural language text describing the task that an artificial intelligence, Al, in this case an LMM, should perform. The prompt may be provided by a user such as plant operator or the software engineer. A prompt may thus cause the LMM to provide, i.e. output, a description of the environment of the object.

The spatial information may be given in the form of coordinates. In general, the spatial information may comprise spatial coordinates which enable specifying a location of the object. Spatial information may also comprise pixel coordinates, e.g. in an (captured) image.

A vector database, vector store or vector search engine is a database that can store vectors (fixed-length lists of numbers) along with other data items, i.e. the payload. As proposed herein, the vector database stores features vectors as well as spatial coordinates. The vector database implements one or more approximate nearest neighbor algorithms, so that one can search the database with a query vector to retrieve the closest matching database records. As proposed herein the query vector is an embedding of the textual description of an image provided in the form of image data. By querying the vector database, a nearest embedding, or nearest feature vector, is determine din the database and the coordinates of that nearest feature vector as stored in the database may be used as first spatial information for locating, or localizing, the object.

Now, as the case may be, second spatial information, e.g., in the form of coordinates, may be obtained from sensor data from one or more sensors. The coordinates of the first and second spatial information may relate to the same coordinate system. The second spatial information may be obtained independently from the first spatial information, i.e. by other sensors and one or more other localization techniques. Thus, the first and second spatial information may be used, e.g. fused, in order to obtain an improved result of the position of the object.

A further step is shown in Figure 6. In a step S4 a feature vector, also simply referred to as vector, of the textual description may be obtained by embedding the textual description in an embedding space.

The textual description describing the domain of interest is used to compute a feature vector (known as an "embedding"), typically using a deep learning network. The vector and the textual description may then be stored in the vector database, e.g. when the database is initially established or updated, or the vector may be used to query the database to determine a similar vector and thus to obtain the first spatial information associated with this similar vector.

In natural language processing, a word or phrase embedding is a representation of a word or phrase. The embedding of the textual description in the present case is used for the positioning or localization of the object within the environment. Typically, the representation is a real-valued vector that encodes the meaning of the word or phrase in such a way that the words that are closer in the vector space are expected to be similar in meaning. Word or phrase embeddings can be obtained using language modeling and feature learning techniques, where words or phrases from the vocabulary are mapped to vectors of real numbers. Methods to generate this mapping include neural networks, dimensionality reduction on the word co-occurrence matrix, probabilistic models, explainable knowledge base method, and explicit representation in terms of the context in which words appear.

As the case may be in an additional or alternative step, the sensor data and/or spatial information derived from the sensor data is combined with the first spatial information obtained from the vector database, e.g., by a nearest neighbor search. That is, in a sort of sensor fusion, the spatial information can be combined, e.g. weighted, for example 0,5 and 0,5; or 2/3 and 1/3, in order to arrive at a consolidated position (information) for localizing the object with respect to the environment.

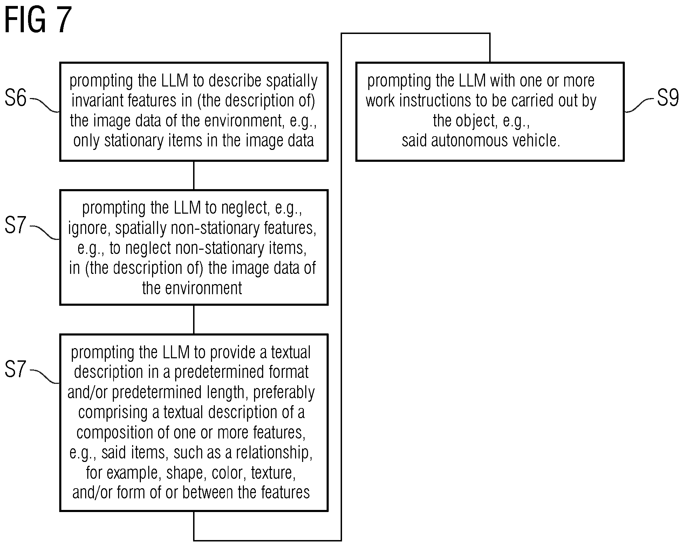

Now turning to Figure 7, the LMM may be instructed by way of one or more prompts that cause the multimodal LLM, or LMM for short, to provide the desired textual description. In a steps S51 and or S52 the LMM may be prompted to describe spatially invariant features in (the description of) the image data of the environment, e.g., only stationary items in the image data, and/or the LMM may be prompted to neglect, e.g., ignore, spatially non-stationary features, e.g., to neglect non-stationary items, in (the description of) the image data of the environment. In a step S6 the LMM may, additionally or alternatively, be prompted to provide a textual description in a predetermined format and/or predetermined length, preferably comprising a textual description of a composition of one or more features, e.g., said items, such as a relationship, for example, shape, color, texture, and/or form of or between the features. In a step S7 the LMM may be prompted with one or more work instructions to be carried out by the object, e.g., said autonomous vehicle.

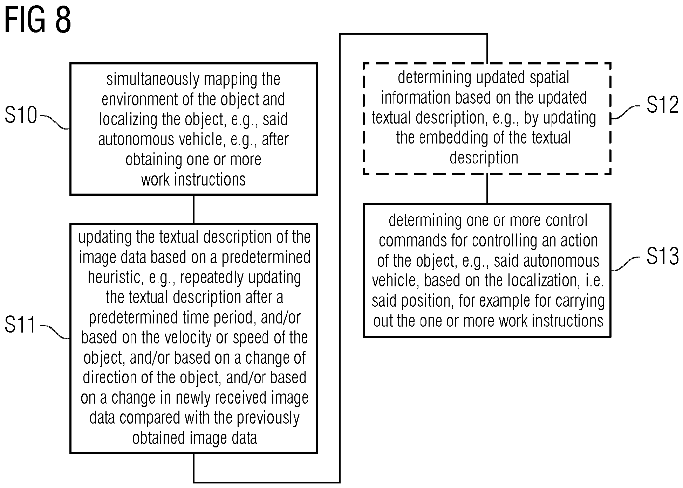

As shown in Figure 8 in step S10 the environment of the object may be mapped and located simultaneously, i.e. in parallel, after obtaining one or more work instructions. That is, the object's location may be tracked in an unknown environment. To that end, e.g. if so required by the work instructions, in one or more steps S11 the textual description of (new) image data may be updated based on a predetermined heuristic, e.g., repeatedly updating the textual description after a predetermined time period, and/or based on the velocity or speed of the object, and/or based on a change of direction of the object, and/or based on a change in newly received image data compared with the previously obtained image data. That is, based a number of frames captured by the camera, e.g. after receiving a number of frames, the image data of the camera may be input into the LMM (together with a prompt) in order to obtain said new and/or updated textual description. Hence, in a step S12 updated spatial information may be determined based on the updated textual description, e.g., by updating the embedding of the textual description, and e.g. in accordance with the predetermined heuristic. Hence the position may be (periodically) (re-)determined, e.g. in accordance with the heuristic, which may also be adapted and/or re-determined of course. Hence, it becomes possible to uninterruptedly determine the position and thus localize (with respect to the environment, e.g. a coordinate system or other objects in the environment) the object. In an (optional or) addition step S13, one or more control commands for controlling an action of the object, e.g., said autonomous vehicle, may be determined based on the localization, i.e. said position, for example for carrying out the one or more work instructions. Thus, when at a certain position or when reaching a certain position, the object may be instructed to perform certain actions such as (off-)loading of any items (to be) transported. The object may also be instructed to return to a previous or travel to an otherwise specified position.

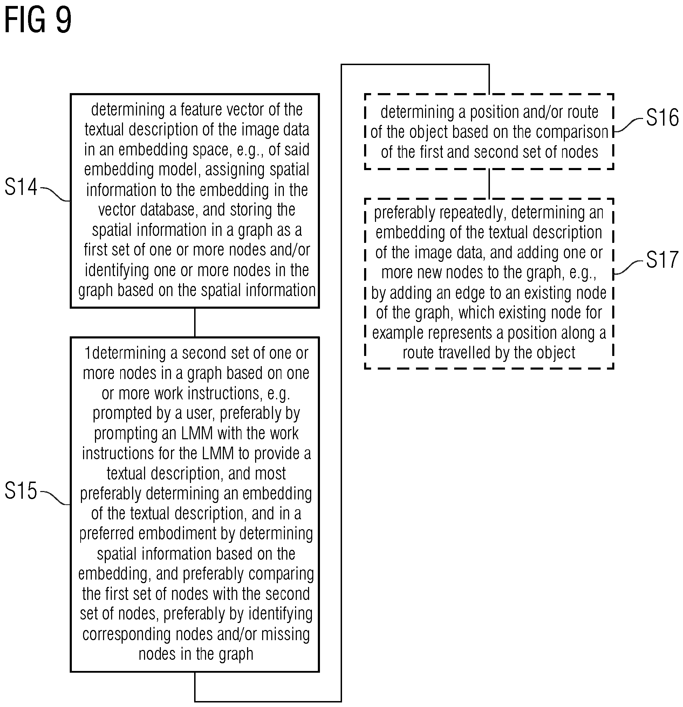

Turning to Figure 9, in one or more steps S14 a feature vector of the textual description of the image data in an embedding space, e.g., of said embedding model, may be determined. Subsequently, the spatial information may be assigned to the embedding in the vector database, and the spatial information may be stored in a graph as a first set of one or more nodes and/or identifying one or more nodes in the graph based on the spatial information. Subsequently, in one or more steps S15 a second set of one or more nodes in a graph or the graph may be determined based on one or more work instructions, e.g. prompted by a user, preferably by prompting an LMM with the work instructions for the LMM to provide a textual description: Preferably an embedding of the textual description is determined, and most preferably spatial information may be determined based on the embedding. Furthermore, the first set of nodes may be compared with the second set of nodes, preferably by identifying corresponding nodes and/or missing nodes in the graph. Thereby is becomes possible to determine the position of the object and/or route of the object based on the comparison of the first and second set of nodes, e.g. in one or more steps S16. In yet another step S17, it is proposed to, preferably repeatedly, determine an embedding of the textual description of the image data, and add one or more new nodes to the graph, e.g., by adding an edge to an existing node of the graph, which existing node for example represents a position along a route travelled by the object.

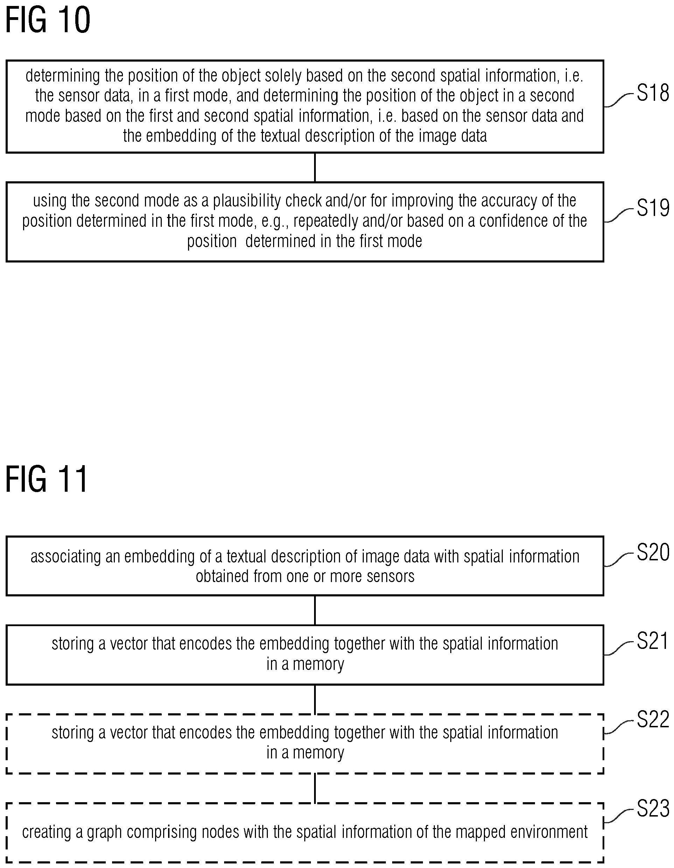

As illustrated in Figure 10, it is proposed in on or more steps S18 to determine the position of the object solely based on the second spatial information, i.e. the sensor data, in a first mode, and to determine the position of the object in a second mode based on the first and second spatial information, i.e. based on the sensor data and the embedding of the textual description of the image data. It is furthermore proposed in a step S19 to use the second mode as a plausibility check and/or for improving the accuracy of the position determined in the first mode, e.g., repeatedly and/or based on a confidence of the position determined in the first mode. As desired, the accuracy may be output and/or may be further made use of in order to instruct the object, e.g., said AGV/AMR to perform one or more actions. In yet another one or more steps the second mode, or the results thereof, may be used as a plausibility check and/or for improving the accuracy of the position determined in the first mode, e.g., repeatedly and/or based on a confidence of the position, as e.g. determine in the first mode.

Turning to Figure 11 it is proposed to create a vector database, i.e. for mapping an environment may be created, or to populate said vector database. Hence at first, an embedding of a textual description of image data may be associated with spatial information obtained from one or more sensors in a step S20. Subsequently, a vector that encodes the embedding together with the spatial information may be stored in an, e.g., non-volatile, memory in a step S21. Subsequently, these steps may be repeated, e.g., periodically, or based on a change in the image data captured and/or input into the LMM, or based on a velocity, speed, or change of direction of the object, until a plurality of embeddings and spatial information have been associated, most preferably until a predetermined space of the environment has been mapped, as illustrated by step S22. Furthermore, in a step S23 a graph may be created and/or stored, e.g. in said memory, wherein the graph comprises nodes with the spatial information of the mapped environment (as obtained by embedding the textual description and associating spatial information to that embedding, i.e. as stored in the vector database).

## Claims

1. A, preferably computer-implemented, method of localizing an object (1), e.g., an autonomous vehicle, the method comprising the steps of:
inputting image data (2) of an environment (3) of the object and a prompt (6) into a multimodal LLM for the LMM (4) to generate a textual description (5) of the image data (2) in accordance with the prompt (6),
obtaining first spatial information (7) from a vector database (8), wherein the vector database (8) serves for associating an embedding (9) of the textual description (5) with the first spatial information (7), and
determining a position (100) of the object (1) based on the first spatial information (7), and preferably second spatial information, e.g., in the form of coordinates, obtained from sensor data (10) from one or more sensors (11).

2. The method according to any one of the preceding claims,
obtaining a feature vector (9) of the textual description (5) by embedding the textual description (5) in an embedding space, for example, using an, e.g., pre-trained, embedding model (90).

3. The method according to any one of the preceding claims,
prompting the LMM (4) to describe spatially invariant features (31) in, e.g., the textual description of, the image data (2) of the environment (3), e.g., only stationary items in the image data, and/or
prompting the LMM (4) to neglect, e.g., ignore, spatially non-stationary features (32, 33), e.g., to neglect non-stationary items, in (the textual description of) the image data of the environment, and/or
prompting the LMM (4) to provide a textual description (5) in a predetermined format and/or predetermined length, preferably comprising a textual description of a composition of one or more features in the image data, e.g., said items, such as a relationship, for example, shape, color, texture, and/or form of or between the features in the image data.

4. The method according to any one of the preceding claims,
combining the sensor data (10) and/or spatial information (7) derived from the sensor data (10) with the first spatial information (7) obtained from the vector database (8), e.g., by a nearest neighbor search, and/or
simultaneously mapping the environment (3) of the object (1) and localizing the object (1), e.g., said autonomous vehicle, e.g., after obtaining one or more work instructions.

5. The method according to any one of the preceding claims,
updating the textual description (5) of the image data based on a predetermined heuristic, e.g., repeatedly updating the textual description (5) after a predetermined time period, and/or based on the velocity or speed of the object (1), and/or based on a change of direction of the object (1), and/or based on a change in newly received image data compared with the previously obtained image data (2).

6. The method according to any one of the preceding claims,
determining updated spatial information (7) based on the updated textual description (5), e.g., by updating the embedding (9) of the textual description (5).

7. The method according to any one of the preceding claims,
determining one or more control commands for controlling an action of the object (1), e.g., said autonomous vehicle, based on the localization, i.e. said position, for example for carrying out the one or more work instructions.

8. The method according to any one of the preceding claims,
determining a feature vector (9) of the textual description (5) of the image data (2) in an embedding space, e.g., of said embedding model (90),
assigning spatial information (7) to the embedding in the vector database (8), and
storing the spatial information (7) in a graph (50) as a first set of one or more nodes (51) and/or identifying one or more nodes (51) in the graph (50) based on the spatial information (7).

9. The method according to any one of the preceding claims,
determining a second set of one or more nodes (52) in a graph (50) based on one or more work instructions, e.g. prompted by a user, preferably by prompting an LMM with the work instructions for the LMM (4) to provide a textual description (5), and most preferably determining an embedding (9) of the textual description (5), and in a preferred embodiment by determining spatial information (7) based on the embedding (9),
and preferably comparing the first set of nodes (51) with the second set of nodes (52), preferably by identifying corresponding nodes and/or missing nodes in the graph (50).

10. The method according to any one of the preceding claims,
determining a position (100, 101, 102, 103) and/or route (a, b, c) of the object (1) based on the comparison of the first and second set of nodes (51, 52).

11. The method according to any one of the preceding claims,
preferably repeatedly, determining an embedding (9) of the textual description (5) of the image data, and
adding one or more new nodes (52, 51) to the graph (50), e.g., by adding an edge to an existing node of the graph, which existing node for example represents a position along a route (a, b, c) travelled by the object (1).

12. The method according to any one of the preceding claims,
determining the position (100) of the object (1) solely based on the second spatial information, i.e. the sensor data, in a first mode, and
determining the position (100) of the object in a second mode based on the first and second spatial information, i.e. based on the sensor data and the embedding of the textual description of the image data, and/or using the second mode as a plausibility check and/or for improving the accuracy of the position (100) determined in the first mode, e.g., repeatedly and/or based on a confidence of the position (100) determined in the first mode.

13. A method of creating a mapping of an environment of an object, the method comprising:
associating an embedding (9) of a textual description (5) of image data (2) with spatial information (7) obtained from one or more sensors (11),
storing a vector that encodes the embedding (9) together with the spatial information (7) in a, preferably non-volatile, memory,
and preferably repeating the steps, e.g., periodically, or based on a change in the image data (2) input, or based on a velocity, speed, or change of direction of the object (1), until a plurality of embeddings (9) and spatial information (7) have been associated, most preferably until a predetermined space of the environment (3) has been mapped,
and/or creating a graph (50) comprising nodes (51, 52) with the spatial information (7) of the mapped environment (3).

14. An apparatus (1), for example an autonomous vehicle, preferably comprising a processor and a memory, operative to perform any one of the method steps of the preceding claims 1-13.

15. A computer-program comprising program code that when executed performs the method steps of any one of the preceding claims 1-13.
